# EUROPEAN PATENT SPECIFICATION

(11) **EP 0 201 522 B1**
(45) Date of publication and mention of the grant of the patent: **15.09.1993**
(21) Application number: 85905146.8
(22) Date of filing: 26.09.1985
(51) Int. Cl.: C08F 8/20, C08F 8/22

(54) **ACID SCAVENGED POLYMER HALOGENATION**
POLYMERHALOGENIERUNG UNTER VERWENDUNG EINER SÄUREELIMINIERUNG
HALOGENATION DE POLYMERES PAR L'UTILISATION D'UN COPRECIPITANT ACIDE

(30) Priority: 01.10.1984 US 656435
(43) Date of publication of application: 20.11.1986
(73) Proprietor: EXXON RESEARCH AND ENGINEERING COMPANY, Florham Park, NJ 07932 (US)
(72) Inventor: GARDNER, Irwin, Jerome, Scotch Plains, NJ 07076 (US); FUSCO, James, Vincent, Red Bank, NJ 07701 (US); NEWMAN, Neil, Frederick, Edison, NJ 08820 (US); KOWALSKI, Ronald, Charles, New Providence, NJ 07974 (US); DAVIS, William, Myers, Westfield, NJ 07091 (US)
(74) Representative: Dew, Melvyn John; Bawden, Peter Charles; Northover, Robert Frank
(86) International application number: US8501859
(87) International publication number: WO8602083

(56) References cited:
- DE-A- 2 349 565
- FR-A- 2 211 484
- GB-A- 1 202 229
- US-A- 2 470 952
- US-A- 2 637 753
- US-A- 2 995 546
- US-A- 3 099 644
- US-A- 3 180 856
- US-A- 3 192 188
- US-A- 3 454 544
- US-A- 4 200 703

## Description

This invention relates to a continuous process for the manufacture of halogenated butyl rubber polymers (rubber being a copolymer of a major proportion of an iso-olefin and a minor proportion of a multi-olefin). by halogenation wherein a substitution reaction results in the generation of hydrogen halide as a by-product or where hydrogen halide may be formed.

Numerous references teach methods for halogenating various polymers, for example the halogenation of butyl rubber. An early reference, U.S. Patent 2,944,578, teaches that chlorinated butyl rubber can be produced in a batch process by dissolving butyl rubber in a suitable, non-reactive solvent, e.g., hexane, and introducing chlorine or a chlorinating agent. By suitable control of the temperature, concentrations of chlorinating agent and rubber, and reaction time, chlorinated rubber containing the desired level of chlorine is produced.

An improved, continuous solution process for chlorination or bromination of butyl rubber was subsequently disclosed in U.S Patent 3,099,644. This patent also notes the incidental inclusion of zinc and calcium stearates, and metal soaps, as residual emulsifying agents from the butyl rubber polymerization process. No scavenging affects are described or otherwise indicated for these compositions. The halogenation of ethylene-propylene non-conjugated diene elastomers (EPDM) has also been disclosed ; such processes are analogous to those for halogenating butyl rubber. For example, U.S. Patent 4,051,083 describes the solution bromination and chlorination of EPDM using N-halosuccinimide; additionally, the "neat" halogenation of EPDM is also described. In the latter disclosure the halogenating agent is dispersed in the EPDM by blending on a cool rubber mill and halogenation is effected by heating the mixture in a hydraulic press.

Halogenation of EPDM in an aqueous batch process is disclosed in U.S. 3,896,095. The process employs the addition of an excess of Cl₂ or Br₂ to a polymer slurry to effect halogenation and avoid the expense of solvent recovery systems previously disclosed for solution halogenation processes.

Chlorobromination of polymers such as polybutadiene, butadiene-isoprene copolymers and natural or synthetic polyisoprene is disclosed in British 1,483,063 and 1,483,064. The reaction is described as taking place at a low temperature of 0-15°C, preferably in an inert solvent, and the halogenated products are described as containing high levels, e.g., at least 55% by weight of halogen.

The possibility of producing a halogenated rubber such as halogenated butyl rubber continuously in an extruder-reactor has been recognized, see, e.g., U.S. Patent 4,185,057. However, the generalized disclosure of that reference does no more than acknowledge the desirability of such a process, but does not teach one how to accomplish such a process. The reference suggests that only enough chlorine be introduced into the extruder to react with the butyl rubber so that no chlorine remains after reaction. It then goes on to suggest that another gas, e.g., nitrogen, be introduced to effect the production of gas filled pores in the finished rubber, which is the primary object of the invention. No examples are disclosed in the patent and no conditions disclosed which would enable one to actually conduct such a butyl halogenation process.

Chlorination of butyl rubber using dichloramine-T and a calendar had been reported by Bulgarian workers (Kh. Tenchev. et al, Chem Abstracts 50756u). The disclosed process was not intended to produce neat chlorinated butyl since calendaring is carried out on a mixture of butyl rubber, accelerators, prevulcanization inhibitors as well as variable amounts of carbon black and dichloramine-T.

The halogenation, in a kneader or extruder, of polymers containing carboxylic acid groups using reagents that differ from those disclosed herein is described in U.S. Patent 3,364,187. The polymers are converted to the acyl halide derivatives using specific halogenating agents. The patent suggests that the kneading step may be carried out in an extruder, a Banbury mixer, a roll mill or any other apparatus that yields the described kneading action.

GB-A-1,257,016, discloses a process for treating polymers with halogenating agents such as N-bromosuccinimide under mechanical shear and at high temperature (120-180°C) for the purpose of producing unsaturation. The patent mentions that halogenation may possibly occur in an intermediate step followed by dehydrohalogenation, but production and isolation of a useful halogenated product is not an objective, nor is it achieved. The reference also discloses the use of scavenging amounts of a metal oxide or carbonate such as magnesium oxide, zinc oxide or calcium carbonate in addition to the halogenating agent and alpha-olefin polymer. The patent discloses, as an alternate method, the pre-blending of the halogenating agent with a solution of the polymer followed by solvent removal. It is stated that vary little, if any, reaction occurs during such an operation. The reference does not disclose that scavenging agent can be used to produce halogenated polymers nor that the absence of such scavengers can affect the configuration of the halogenated polymer.

An extensive disclosure of polymer modifications conducted in an extruder can be found in U.S. Patent No. 3,862,265. This patent is directed to modification of polyolefins using heat, shear and controlled pressure to induce degradation in the polyolefin and to combine the polyolefin with a free-radical initiator and/or one or more monomers. The broad disclosure is of value for its teachings directed to the modification of polyolefins with various monomers especially to form novel grafted polymers.

U.S. Patent 3,510,416 (Vaccari et al) teaches an improved method of halogenating PVC particles by using gaseous chlorine in combination with a swelling agent (chlorination carrier). Following reaction, the PVC particles are transferred to another piece of equipment (a dryer) in which the chlorination carrier is stripped and gas by-products are separated. This reference discloses a process based on particle fluidization which relies on diffusion to accomplish drying; in addition, such a process requires separate pieces of equipment and relatively long times for drying.

A recent U.S. Patent, 4,384,072, EP-A-0124279 based on U.S. serial no. 481,366 (filed April 1, 1983) and EP-A-0124278 based on U.S. serial no. 481,320 (filed April 1, 1983) disclose methods for halogenating neat polymers, i.e., not requiring the use of solution techniques. These disclosures are mentioned for the benefit of their teachings and their relevance to this process generally, but they do not disclose the advance herein.

In 1979 Van Tongerloo et al disclosed a brominated butyl rubber which was low in conjugatad diene content (if any) and in which the halogen was incorporated as primary allylic halogen as well as secondary and tertiary allylic halogen. (Van Tongerloo, A. and Vukov, R., Proceedings, International Rubber Conference, Milan, Italy, 1979, p. 70 ff). The reference states that the polymer was produced by a proprietary method and discloses only that rearrangement to the more stable primary configuration can be accomplished in brominated butyl rubber "under a variety of conditions -- for example, in the presence of acid, free radicals, bases or heat."

Stabilized halogenated butyl rubber described in U.S. Patent No. 4,130,519 discloses stabilizing agents which are added to the halogenated rubber following halogenation, i.e., in order to protect the rubber during further processing or during storage.

Some polymers, e.g., butyl rubber, are particularly sensitive when exposed to shear and elevated temperatures in the presence of a halogenating agent. The halogenation reaction of butyl rubber in solution is described in "Encyclopedia of Chemical Technology", Kirk-Othmer, Third Edition (1979), Volume 8 at page 476 ff. It is noted that the halogenation reaction carried beyond one halogen atom per olefin unit is complicated by chain fragmentation. Indeed, such fragmentation or degradation is a persistent problem when halogenation of butyl rubber is attempted; that problem is aggravated under conditions of heat and shear. A method of preparing halogenated butyl rubber in solution is described in U.S. Patent No. 3,099,644.

According to the present invention there is provided a continuous process for halogenating butyl rubber polymer comprising adding an effective amount of acid scavenger to said polymer wherein said scavenger is selected from the group consisting of epoxides selected from the group consisting of expoxidized esters and glycerides of unsaturated fatty acids of C₈ to C₂₄, metal oxides or hydroxides, inorganic salts of strong bases and weak acids (excluding alkali metal or alkaline earth metal carboxylates) and mixtures thereof.

In preferred alternative embodiments, the scavenger is added to bulk polymer prior to halogenation in an extruder or the scavenger is added to a solution of the polymer as it is being fed to a halogenation contactor. The products of this process are useful for a wide range of applications including tires, innertubes, mechanical goods, hoses, and electrical products. Halogenated butyl rubber is capable of being vulcanized with sulfur-free cure systems, for example, zinc oxide in combination with stearic acid; this halogenated rubber can also be vulcanized by standard sulfur and sulfur-donor-containing systems.

The butyl rubber copolymers useful in the present invention contain a major proportion, preferably at least 70 wt.%, of isoolefins and a minor proportion, preferably not more than about 30 wt.%, of multi-olefins. Copolymers of this general type, especially where the copolymer contains about 85-99.5% (preferably 95-99.5%) of a C₄-C₇ isoolefin, such as isobutylene, with about 15-0.5% (preferably about 5-0.5 wt.%) of a multi-olefin of about 4-14 carbon atoms, are commonly referred to in patents and literature as "butyl rubber"; see, for example, the text-book "Synthetic Rubber" by G. S. Whitby (1954 edition by John Wiley and Sons, Inc.), pages 608-609, "Encyclopedia of Chemical Technology", Third Edition, Volume 8, (1979), pages 470-484, etc. The expression "butyl rubber" as employed in the specification and claims is intended to include copolymers containing about 80-99% by weight of an isoolefin of about 4-7 carbon atoms and about 20-1 % of conjugated multi-olefin of about 4-10 carbon atoms. The preparation of butyl-type rubbers is amply described in the literature. In general, it consists of the reaction product of a C₄-C₇ isoolefin (preferably isobutylene) with a C₄-C₁₀ (preferably a C₄-C₆ conjugated diolefin, such as isoprene, butadiene, dimethyl butadiene, piperylene, etc. The reaction product of isobutylene and isoprene is preferred. The preparation of butyl rubber is described in U.S. Patent 2,356,128.

Conventional high molecular weight butyl rubber generally has a number average molecular weight of about 25,000 to about 500,000, preferably about 80,000 to about 300,000, especially about 100,000 to about 250,000; and a Wijs Iodine No. of about 0.5 to 50, preferably 1 to 20. More recently low molecular weight polymers have also been prepared which have number average molecular weights of from 5,000 to 25,000 and unsaturation expressed as mole %, of 2-10.

The butyl rubbers referred to above and processes for their preparation are generally described in the Kirk-Othmer "Encyclopedia of Chemical Technology", Third Edition, Volume 8, (1979), p. 470 ff.

Some forms of halogenated butyl rubber, prepared in solution according to processes described above, are commercially available, e.g., chlorinated butyl rubber and brominated butyl rubber. One method used to prepare halogenated butyl rubber is that of halogenating butyl rubber in a solution (butyl rubber cement) containing between 1 to 60% by weight of butyl rubber in a substantially inert C₅-C₈ hydrocarbon solvent such as pentane, hexane, heptane, etc., and contacting this butyl rubber cement with a halogen for a period of up to about 25 minutes. There is then formed the halogenated butyl rubber and a hydrogen halide, the polymer containing up to one or somewhat more halogen atoms per double bond initially present in the polymer. Generally, halogenated butyl rubber comprises a copolymer of 85 to 99.5 wt.% of a C₄ to C₈ isoolefin, e.g., isobutylene, with 15 to 0.5 wt.% of a C₄ to C₁₄ multi-olefin, e.g., isoprene, containing at least about 0.5 wt.% combined halogen in its structure. For example, where butyl is halogenated with bromine, the bromine can be present in the brominated butyl in an amount of from about 1.0 to about 3.0 wt.%, preferably from about 1.5 to about 2.5 wt.%. A method of preparing conventionally halogenated butyl rubber is described in U.S Patent 3,099,644.

The preparation, in solution, of halogenated butyl rubber containing both bromine and chlorine, i.e., bromochlorinated butyl rubber, is described in U.S. Patent 4,254,240. The potential for molecular weight breakdown of the butyl rubber, noted earlier, is present even where bromine chloride is used as the halogenating agent, as disclosed in this reference (column 4, lines 24-32).

In the halogenation of the butyl rubber polymers suitable for use in this invention, hydrogen halide is often formed as a by-product. It is the objective of this invention to remove the hydrogen halide by reaction with an effective amount of an acid scavenger. Such removal precludes the acid from being available to participate in further addition and/or rearrangement and/or degradation reactions. In addition, the acid will not be available to cause corrosion problems, particularly if an aqueous stream is present.

Several types of scavengers are useful in this process. Generally suitable is any scavenger that is capable of reacting with the hydrogen halide, but does not interfere with the subsequent utility of the polymer, or can be removed from the polymer prior to its eventual end use. Useful scavenging agents include alkali metal or alkaline earth metal carboxylates, epoxides, metal oxides, metal hydroxides inorganic salts of strong bases and weak acids and mixtures thereof.

Suitable epoxides are the products formed by epoxidizing esters and glycerides of unsaturated fatty acids of about C₈ to C₂₄, such esters as soybean oil, castor oil, linseed oil, safflower oil, etc. The preferred specific polyethers of this class include epoxidized soybean oil and epoxidized linseed oil (sold under the trademarks Drapex 6.8 and Drapex 10.4, respectively).

The metal oxides or hydroxides suitable for use in this invention include those wherein the metal is selected from Group IIA of the Periodic Table. Particularly suitable are Ca(OH)₂, CeO, Mg(OH)₂ and MgO.

Suitable examples of inorganic salts of strong bases and weak acids include bicarbonates of sodium, potassium and calcium.

The acid scavenger should be present in an amount which is effective to react with the hydrogen halide by-product formed during halogenation, taking into consideration reaction kinetics, e.g., temperature in the region in which the scavenger must react, the time available for the reaction compared to the potential for the acid halide to cause an undesirable side reaction (e.g. addition or degradation or isomerization), the use of additional means to remove hydrogen halide from the process (e.g., gas scrubbing, particularly in a process for halogenation of neat polymer), etc. Some limited experimentation, well within the skill of those in the art, will readily determine the effective amount of scavenger to be used in the particular circumstances at hand. As a general guide it will be recognized that in the absence of other means of removing hydrogen halide (e.g., gas scrubbing), one equivalent of scavenger is required at equilibrium per equivalent of hydrogen halide generated, but that as a practical matter up to about two to three times the theoretical amount can be used effectively. Where supplementary means are provided for hydrogen halide removal as little as one-half or one-quarter the theoretical amount can be used effectively.

In the presence of hydrogen halide polymer changes can be accelerated at elevated temperatures. For example, although bromination of butyl rubber at moderate temperature (e.g. 25°C) can result in a brominated polymer with a high proportion of secondary allylic bromine, and minor amounts of tertiary, isomerization to a primary allylic structure increases at elevated temperatures; isomerization at elevated temperature is also increased in an acidic environment. Use of an acid scavenger reduces such isomerization, as where the polymer is present during the halogenation process at a temperature of from about 50-190°C, particularly 60-175°C, more particularly 65-140°C, most particularly 70-125°C, for example at 75-175°C.

In one preferred embodiment the polymer and halogenating agent are contacted, or reacted, in a nonsolution, continuous flow device; a neat or bulk process. Suitable devices include kneaders, extruders (employing single or multiple screws, e.g., twin screws, continuous mixers and a recently disclosed blending/extrusion device referred to as a cavity transfer mixer (see, e.g., European Rubber Journal, July-August, 1982, pages 29-32 and G.M. Gale, U.K. Patent Application 8030586, 1980). Although such polymers can attain very high viscosities, even at relatively high temperatures, such devices are capable of subjecting polymers to deformation.

The continuous flow device should be capable of initially forming the polymer feed into a cohesive mass and then deforming the polymer, disrupting the polymer surface, thereby exposing fresh, i.e., unreacted, polymer to the halogenating agent. The exposure of new surface does not necessarily require the use of high speeds where, e.g., an extruder is used. However, surface disrupting means are preferably employed (as will be described in detail below), for example, pins, reverse flow sections, a "Maillefer" screw design, the cavities of a cavity transfer mixer, multiple flight screw section, interrupted flight sections, e.g., slotted flights, and combinations thereof. A process for the neat halogenation (non-solution) of polymers is described in detail in EP-A-0124278 and EP-A-0124279. When carrying out the present invention in such processes, the acid scavenger can be added to the polymer feed. This can be achieved, e.g., by preblending the scavenger with the polymer or by feeding the scavenger with the polymer as the polymer is fed to the halogenating device. In both cases, the amount of scavenger is controlled so as to achieve the desired effect of reacting with by-product hydrogen halide; excessive amounts are not beneficial as they add to the cost of the process and can be residual additives in the polymer. If the scavenger is intended to serve an additional purpose in the finished polymer, e.g., further stabilization against dehydrohalogenation or heat, the amount used can be adjusted for that purpose.

In another preferred embodiment halogenation is conducted in a solution process, i.e., a solution of the polymer in a suitable, non-reactive solvent (a "cement") is halogenated. Such a process is well known in the art and has been referred to previously. In such a process, the acid scavenger can be added to the cement prior to contact with the halogenating agent. Alternatively, the scavenger can be added to the reactor to which the halogenating agent is being added. In order to improve the efficiency of the scavenger suitable means should be provided for thorough mixing or dispersion of the scavenger in the reaction medium.

As described in the cited references, the halogenating agent can be gaseous, liquid or solid and may be further diluted with a suitable inert fluid, e.g., organic or inorganic liquids as well as gases such as inert gases, CO₂ and air. Suitable halogenating agents include chlorine, bromine, sulfuryl halide, etc. Gaseous chlorine and bromine are preferred, particularly then mixed with nitrogen.

Following reaction in either a neat or solution process, the process features normally employed can be utilized, e.g., neutralization to insure that unwanted by-products and unreacted halogenating agent are reduced or eliminated, stabilizer addition, solvent removal where warranted, drying where required, etc.

The halogenated butyl rubber polymers produced by the process of this invention can be processed in standard equipment used for the polymer, such as internal mixers, mills, extruders, calenders, etc. Said polymers are amenable to conventional compounding practice and various fillers and extenders can be incorporated, e.g., various carbon blacks, clays, silicas, carbonates, oils, resins, waxes, etc.

Halogenated butyl rubber produced by the process of this invention (e.g., chlorinated and/or brominated) may be cured or vulcanized by any of the prior art methods suitable for such halogenated rubbers, e.g., using sulfur, sulfur-containing curing agents (such as sulfenamide derivatives, benzothiazyl disulfide, tetramethylthiouram disulfide, alkyl phenol disulfide, etc.), zinc oxide alone or with various promoters, and mixtures thereof. Curing is usually accomplished at a temperature of from about 140°C to about 250°C, preferably 150°C to about 200°C, and usually takes from 1 to 150 minutes. Such rubber is useful in tires, e.g., innerliners and sidewalls; in innertubes; hoses; mechanical goods; sheeting; electrical insulation; plastic blends, etc.

This invention will be further understood by reference to the following examples which describe equipment demonstrating the principles of this invention.

### EXAMPLE 1

This invention is particularly useful in the bromination of butyl rubber. In the bromination of butyl rubber, isoprene residues in the rubber (I) react with bromine to yield substituted structure II and by-product hydrogen bromide: 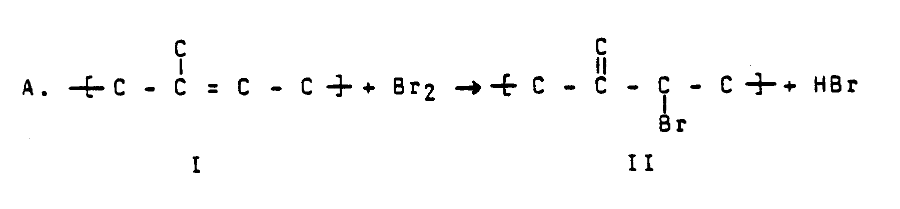
Further reaction of structure II results in structure III via rearrangement, conjugated diene structure IV via elimination and conjugated diene structure V via elimination and rearrangement: 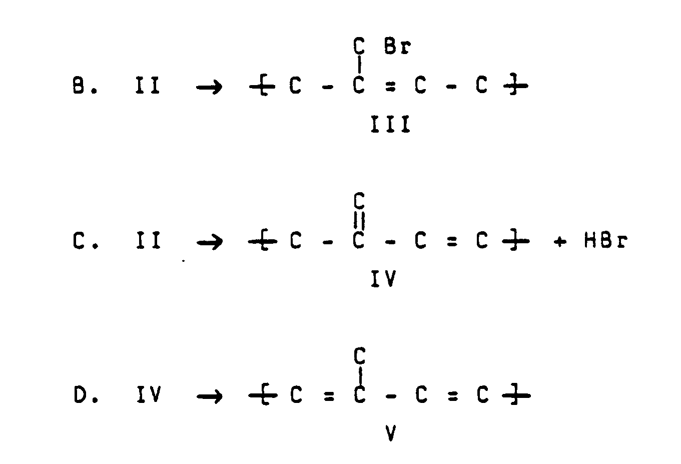
In commercial brominated butyl rubber made in solution, the reacted isoprene residues are primarily structure II, with minor proportions of structures III and V. It is also observed that some molecular weight degradation occurs during halogenation as measured by Mooney viscosity of the halogenated elastomer compared to the starting rubber, for example a decrease of about 5-10 points in a test conducted at 125°C (one minute preheat, eight minute test).

In a bulk or neat halogenation process the brominated product has been found to contain a different distribution of structures and somewhat greater molecular weight loss. This is summarized in the following table.

**TABLE I**

| Typical Bromobutyl Comparison Prior to This Invention | | | | |
|---|---|---|---|---|
| Halogenation Method | Proportion of Reacted I | | | Mooney Loss (1'+8') 125°C, Points |
| | II | III | V | |
| Solution | 70-90 | 5-20 | 3-10 | 5-10 |
| Bulk/neat | 10-50 | 40-70 | 15-30 | 13-20 |

In the following experiments, the acid scavengers shown were first dispersed in the butyl rubber to be halogenated by mixing the scavenger and butyl in a Banbury mixer for about 2 minutes. The rubber was then halogenated in the bulk phase using an extrusion device as described in EP-A-0124278 using a partially filled reaction zone, a mixture of bromine and nitrogen as the halogenating agent and nitrogen purging following reaction. The amount of scavenger shown is weight percent based on the polymer and the distribution of structures was determined using nuclear magnetic resonance spectroscopy (NMR).

**Table II**

| Effect of Acid Scavengers on Bulk Bromination of Butyl | | | | | |
|---|---|---|---|---|---|
| Scavenger | Run | Proportion of Reacted I | | | Mooney Loss, (1'+8') 125°C, Points |
| | | II | III | V | |
| None | A | 10 | 62 | 28 | 13 |
| | B | 43 | 43 | 15 | 19 |
| | C | 37 | 41 | 22 | 13 |
| 1% CaSt₂* | D | 50 | 42 | 8 | 15 |
| 0.1% MgO | E | 50 | 32 | 18 | 8 |
| 0.3% ESBO** | E | 68 | 17 | 15 | 5 |

| | | | | | |
|---|---|---|---|---|---|
| *CaSt₂ = calcium stearate | | | | | |
| **ESBO = Epoxidized soybean oil | | | | | |

The acid scavengers had a significant effect on the structure of the rubber produced as well as generally resulting in less molecular weight loss.

As discussed previously, the acid scavengers can be effectively used in combination; Table III shows the results of several cominations.

**TABLE III**

| Scavenger Combinations in Bulk Bromination of Butyl | | | | | |
|---|---|---|---|---|---|
| Scavenger | Run | Proportion of Reacted I | | | Mooney Loss, (1'+8') 125°C, Points |
| | | II | III | V | |
| None | A | 10 | 62 | 28 | 13 |
| | B | 43 | 43 | 15 | 19 |
| | C | 37 | 41 | 22 | 13 |
| 0.1% CaSt₂ | B | 55 | 33 | 12 | - |
| 0.1% ESBO | | | | | |
| 1% CaSt₂ | D | 78 | 17 | 6 | - |
| 1% ESBO | | | | | |
| 0.3% ESBO | F,G | 80 | 10 | 10 | 6 |
| 0.1% MgO | | | | | |
| 0.4% ESBO | H | 78 | 16 | 5 | 8 |
| 0.08% MgO | | | | | |

Extruder conditions were as follows:

| Run | Reactor Length:cm(in) | Stripper | | Stabilizer Injection:cm (in) |
|---|---|---|---|---|
| | | Length:cm (in) | Injection:cm (in) | |
| A | 140 (55) | 48 (19) | 7.6 (3) | -- |
| B | 140 (55) | 48 (19) | 23 (9) | 23 (9) |
| C-H | 124 (49) | 63 (25) | 23 (9) | 38 (15) |

In all runs bromine/nitrogen injection was 12.7 cm (5 in.) from the start of the reaction zone and the reaction zone screw configuration consisted of alternating forward triple slotted flights and forward single and double flights. Stripping gas accomplished with 0.5-4 kg/hr. nitrogen; injection point is measured from the extruder exit. Stabilizer consisted of calcium stearate and expoxidized soybean oil; point of injection measured from extruder exit. Additional conditions were as follows:

| Run | Rubber Feed kg/hr | Bromine Feed | | RPM | Reactor Pressure Bar (absol.) | Reaction Zone Rubber Temp., °C |
|---|---|---|---|---|---|---|
| | | kg/hr | N2/Br2 | | | |
| A | 35 | 2.4 | 3 | 95 | 4-5 | 90 |
| B | 32 | 2 | 3-4 | 88 | 4.25 | 90 |
| C | 38 | 2.4 | 4 | 114 | 6 | 110 |
| D | 36 | 2.4 | 4-6 | 90 | 7.5 | 105 |
| E | 35 | 2 | 4.5-5 | 90 | 7-8 | 95 |
| F | 38 | 1.8 | 6-8 | 92 | 7.2 | 90 |
| G | 36 | 2.7 | 4-5 | 92 | 7-8 | 95 |
| H | 36 | 2.5 | 3-5 | 90 | 4-5 | 95 |

### EXAMPLE 2

Solution bromination was conducted using butyl rubber with a commercial grade designation of 268 (Exxon Chemical Co.); Mooney viscosity of the rubber was 58 (125°C) and unsaturation was 1.65 mole %. Halogenation was conducted in a 500 ml., 4 neck round bottom flask which was blackened to exclude light. The rubber was dissolved in U.V. grade hexane to prepare a 20 wt. % cement. The flask was fitted with a wet ice condenser, stirrer, sampling tube and nitrogen bubbler and immersed in a temperature controlled bath.
(A) Control run: Bath temperature 55°C, no acid scavenger, 250g butyl (grade 278) in hexane, 2.453g bromine in 5g. hexane added for bromination. The polymer obtained after 245 sec. of reaction had the following features:

| | |
|---|---|
| Bromine, wt. % | 2.1 |
| Molecular Weight, vis. avg. | 380,000 |
| Type II Br, mole % | 28 |
| Type III Br, mole % | 59 |

(B) Acid scavenged run: Bath temperature 55°C, acid scavenger -- epoxidized linseed oil, 10.4 wt. % epoxy oxygen (commercial designation Drapex 10.4), 271g butyl in hexane, 7.3g scavenger added to cement and stirred at 800 rpm for 20 min., 2.76g bromine in 20g hexane added. Samples removed at 160, 404 and 710 seconds neutralized with 15 ml. 0.5% NaOH and 10 ml hexane. Results:

| Time | Bromine, wt. % | Molecular Weight |
|---|---|---|
| 160 | 2.22 | 426,000 |
| 404 | 2.69 | 419,000 |
| 710 | 2.48 | 413,000 |

Each of the samples had only trace amounts of Type III structure; 100% Type II.

These results demonstrate the effectiveness of acid scavenging.

## Claims

1. A continuous process for halogenating butyl rubber polymer comprising adding an effective amount of acid scavenger to said polymer wherein said scavenger is selected from the group consisting of epoxides selected from the group consisting of expoxidized esters and glycerides of unsaturated fatty acids of C₈ to C₂₄, metal oxides or hydroxides, inorganic salts of strong bases and weak acids (excluding alkali metal or alkaline earth metal carboxylates) and mixtures thereof.

2. The process of claim 1 wherein said halogenation is conducted in solution.

3. The process of claim 1 wherein said halogenation is conducted as a bulk process.

4. The process of claim 1 wherein said scavenger is added to said polymer prior to contacting with said halogenating agent.

5. The process of claim 1 wherein said scavenger is added during halogenation of said polymer.

6. The process of claim 1 wherein said epoxide is epoxidized soybean oil or epoxidized linseed oil.

7. The process of claim 1 wherein the metal of said metal oxide or hydroxide is selected from the metals of Group IIA of the Periodic Table.

8. The process of claim 7 wherein said metal oxide or hydroxide is selected from the group consisting of Ca(OH)₂, CaO, Mg(OH)₂ and MgO.

9. The process of claim 1 wherein said scavenger is a mixture of an epoxide and a metal oxide.

10. The process of claim 9 wherein said epoxide is epoxidized soybean oil and said metal oxide is magnesium oxide.

11. The process of claim 1 wherein said acid scavenger is present in an amount of up to three times the equivalent of said scavenger per equivalent of hydrogen halide by-product.

12. The process of claim 1 wherein said halogenation is conducted at a temperature of from 50-190°C.

13. The process of claim 1 wherein said inorganic salt is selected from the group consisting of bicarbonates of sodium, potassium and calcium.

## Patentansprüche

1. Kontinuierliches Verfahren zum Halogenieren von Butylkautschukpolymer, bei dem eine wirksame Menge eines Säureeliminierungsmittels zu dem Polymer gegeben wird, wobei das Eliminierungsmittel ausgewählt ist aus der Gruppe bestehend aus Epoxiden ausgewählt aus der Gruppe bestehend aus epoxidierten Estern und Glyceriden von ungesättigten Fettsäuren von C₈ bis C₂₄, Metalloxiden oder -hydroxiden, anorganischen Salzen von starken Basen und schwachen Säuren (ausgenommen Alkalimetall- oder Erdalkalimetallcarboxylate) sowie Mischungen daraus.

2. Verfahren nach Anspruch 1, bei dem die Halogenierung in Lösung durchgeführt wird.

3. Verfahren nach Anspruch 1, bei dem die Halogenierung als Verfahren in Masse durchgeführt wird.

4. Verfahren nach Anspruch 4, bei dem das Eliminierungsmittel dem Polymer zugesetzt wird, bevor es mit dem Halogenierungsmittel kontaktiert wird.

5. Verfahren nach Anspruch 1, bei dem das Eliminierungsmittel während der Halogenierung des Polymers zugesetzt wird.

6. Verfahren nach Anspruch 1, bei dem das Epoxid epoxidiertes Sojabohnenöl oder epoxidiertes Leinöl ist.

7. Verfahren nach Anspruch 1, bei dem das Metall des Metalloxids oder -hydroxids ausgewählt ist aus Metallen der Gruppe IIA des Periodensystems.

8. Verfahren nach Anspruch 7, bei dem das Metalloxid oder -hydroxid ausgewählt ist aus der Gruppe bestehend aus Ca(OH)₂, CaO, Mg(OH)₂ und MgO.

9. Verfahren nach Anspruch 1, bei dem das Eliminierungsmittel eine Mischung aus Epoxid und Metalloxid ist.

10. Verfahren nach Anspruch 9, bei dem das Epoxid epoxidiertes Sojabohnenöl und das Metalloxid Magnesiumoxid ist.

11. Verfahren nach Anspruch 1, bei dem das Säureeliminierungsmittel in einer Menge bis zum dreifachen des Äquivalents des Eliminierungsmittels je Äquivalent Halogenwasserstoff-Nebenprodukt vorhanden ist.

12. Verfahren nach Anspruch 1, bei dem die Halogenierung bei einer Temperatur von 50 bis 190°C durchgeführt wird.

13. Verfahren nach Anspruch 1, bei dem das anorganische Salz ausgewählt ist aus der Gruppe bestehend aus Bicarbonaten von Natrium, Kalium und Calcium.

## Revendications

1. Procédé continu d'halogénation d'un polymère du type caoutchouc butyle, comprenant l'addition d'une quantité efficace d'accepteur d'acide audit polymère, cet accepteur d'acide étant choisi dans le groupe constitué d'époxydes choisis parmi des esters époxydés et des glycérides d'acides gras non saturés en C₈ à C₂₄, des oxydes ou hydroxydes métalliques, des sels inorganiques de bases fortes et d'acides faibles (à l'exclusion de carboxylates de métaux alcalins ou alcalino-terreux) et des mélanges de ces composés.

2. Procédé suivant la revendication 1, dans lequel l'halogénation est conduite en solution.

3. Procédé suivant la revendication 1, dans lequel l'halogénation est conduite comme procédé en masse.

4. Procédé suivant la revendication 1, dans lequel l'accepteur est ajouté au polymère avant la mise en contact avec l'agent d'halogénation.

5. Procédé suivant la revendication 1, dans lequel l'accepteur est ajouté pendant l'halogénation du polymère.

6. Procédé suivant la revendication 1, dans lequel l'époxyde est de l'huile de soja époxydée ou de l'huile de lin époxydée.

7. Procédé suivant la revendication 1, dans lequel le métal de l'oxyde ou de l'hydroxyde métallique est choisi parmi des métaux du Groupe IIA du Tableau Périodique.

8. Procédé suivant la revendication 7, dans lequel l'oxyde ou l'hydroxyde métallique est choisi dans le groupe comprenant Ca(OH)₂), CaO, Mg(OH)₂ et MgO.

9. Procédé suivant la revendication 1, dans lequel l'accepteur est un mélange d'un époxyde et d'un oxyde métallique.

10. Procédé suivant la revendication 9, dans lequel l'époxyde est de l'huile de soja époxydée et l'oxyde métallique est l'oxyde de magnésium.

11. Procédé suivant la revendication 1, dans lequel l'accepteur d'acide est présent en une quantité allant jusqu'à trois fois l'équivalent dudit accepteur par équivalent d'halogénure d'hydrogène formé comme sous-produit.

12. Procédé suivant la revendication 1, dans lequel l'halogénation est conduite à une température de 50 à 190°C.

13. Procédé suivant la revendication 1, dans lequel le sel inorganique est choisi dans le groupe comprenant les bicarbonates de sodium, potassium et calcium.
